# EUROPÄISCHE PATENTANMELDUNG

(11) **EP 1 879 423 A2**
(43) Veröffentlichungstag der Anmeldung: **16.01.2008**
(21) Anmeldenummer: 07013684.1
(22) Anmeldetag: 12.07.2007
(51) Int. Cl.: H04R 1/10, H04B 5/00, H04R 27/00

(54) **Im-Ohr-Lautsprechersystem mit Signalübertragung per Funk**

(30) Priorität: 12.07.2006 DE 102006032242
(71) Anmelder: JoBi GmbH & Co. KG, 72762 Reutlingen (DE)
(72) Erfinder: Brudermüller-Reimann, Joachim, 72762 Reutlingen (DE)
(74) Vertreter: Weiss, Peter

(57) **Zusammenfassung**

Pro Adressat kommt ein IdO-Lautsprecher zum Einsatz. Die Sprachinformation wird per Mikrofon an einer Basisstation aufgenommen, dort in Funksignale verwandelt, per Funk an die IdO-Lautsprecher übertragen und dort wieder in Schall zurückverwandelt. Der wesentliche Gedanke ist die Verwendung einer Vielzahl von Funkkanälen, mit denen einzelne Adressaten gezielt angesprochen werden können. Jeder Adressat verfügt über eine eigene, individuelle Funkfrequenz, die nur er empfangen und über die nur er angesprochen werden kann. Es sind aber auch Durchsagen an mehr als einen Adressaten möglich, also an Gruppen oder auch an alle Adressaten gleichzeitig. Bei entsprechender Auslegung der IT-Verarbeitungskapazität der Basisstation und bei Verwendung mehrerer Mikrofone können auch mehrere Adressaten zu gleicher Zeit mit unterschiedlichen Informationen versorgt werden.

## Beschreibung

Die Erfindung geht aus von Im-Ohr-Hörhilfen (Id0), etwa nach der DE PS 10 2004 016 573 sowie von Headset's z. B. nach der EP 000001 58536, wie sie bspw. bei Opernaufführungen oder auch für die Verständigung von Schiedsrichtern bei Sportveranstaltungen Verwendung finden.

Die Headset's sind für die Zwecke der Erfindung zu gross und zu sperrig und verfügen ausser dem Lautsprecher auch über ein Mikrofon, das für die Aufgabe der Erfindung entbehrlich ist.

Im-Ohr-Hörhilfen weisen zwar die erforderliche Miniaturisierung auf, sind aber nicht in der Lage, Signale über eine Distanz mehr als z.B. 10 m (die normale akustische Reichweite) zu empfangen.

Insbesondere ist es bei beiden beschriebenen Prinzipien nicht geläufig, die Signalübertragung hinsichtlich Adressaten zu differenzieren.

Aufgabe der Neuerung ist die Schaffung eines Systems miniaturisierter Im-Ohr-Lautsprecher, die von einer Basisstation aus einzeln per Funk mit der jeweils nur für einen definierten Adressaten bestimmten Information angesprochen werden können.

Diese Aufgabe wird durch die im Kennzeichen des Hauptanspruchs dazu angegebenen Merkmale gelöst.

Gemäss der Erfindung wird vorzugsweise pro Adressat/Mensch ein IdO-Lautsprecher zum Einsatz kommen, so dass stets ein Ohr zum normalen Hören frei bleibt, was z.B. bei Sportveranstaltungen natürlich ein Vorteil ist.

Die Sprachinformation wird per Mikrofon an einer Basisstation aufgenommen, dort in Funksignale verwandelt, per Funk an die IdO-Lautsprecher übertragen und dort wieder in Schall zurückverwandelt.

Der wesentliche Gedanke der Erfindung ist die Verwendung einer Vielzahl von Funkkanälen, mit denen einzelne Adressaten gezielt und trennscharf angesprochen werden können, ohne die anderen zu stören. Gemäss der Erfindung verfügt also jeder Adressat über eine eigene, individuelle Funkfrequenz, die nur er empfangen und über die nur er angesprochen werden kann. Diese Funkfrequenz kann an der Basisstation eingestellt werden, am besten durch Drücken entsprechend gekennzeichneter Tasten, ähnlich wie bei einer Gegensprechanlage.

Selbstverständlich sind aber auch Durchsagen an mehr als einen Adressaten möglich, also an Gruppen (z.B. die Verteidiger bei einem Fussballspiel) oder auch an alle Adressaten gleichzeitig. Bei entsprechender Auslegung der IT-Verarbeitungskapazität der Basisstation und bei Verwendung mehrerer Mikrofone können auch mehrere Adressaten zu gleicher Zeit mit unterschiedlichen Informationen versorgt werden.

Die Erfindung entfaltet ihre Vorteile überall dort, wo es darauf ankommt, grössere Menschengruppen sinnvoll zentral zu dirigieren, wie z.B. Sportmannschaften, Teams bei Katastropheneinsätzen, Militäreinheiten, Polizeikräfte und dgl.

Der entscheidende Punkt dabei ist die Bereitstellung von prinzipiell beliebig vielen Informations-Inputs auf der Seite der Einsatzleitung für prinzipiell ebenso viele unter-schiedliche Adressaten der jeweiligen Menschengruppe.

Dabei behindert die Im-Ohr-Philosophie den Träger weit weniger als bspw. ein Headset; auch entfällt die komplizierte Gegensprech-Technik, da es sich nur um die Übertragung von Kommandos, Tipps, schnellen Warnungen o. ä. handelt.

Ferner hat sich bei der vorliegenden Erfindung als vorteilhaft erwiesen, dass über entsprechende Basisstationen, die beispielsweise als Handgeräte ausgebildet sind, über entsprechende Auswahltasten, Druckknöpfe od. dgl. Einzelne Teilnehmer bzw. Einzelne Adressaten direkt angesprochen werden können, ohne dass die anderen Beteiligten und über die Basisstation ansprechbaren Teilnehmer davon berührt werden.

Dabei soll auch im Rahmen der vorliegenden Erfindung liegen, dass beispielsweise auswählbare Gruppen von allen Teilnehmern in vorprogrammierbaren Tasten der Basisstation direkt angesprochen werden können, ohne dass die verbleibenden Teilnehmer hiervon gestört werden oder etwas mitbekommen.

Die vorliegende Erfindung erweist sich nicht nur beim Sport, wie Fussball, oder im Trainingsbereich als besonders sinnvoll, da bestimmte Personen, beispielsweise der Torwart oder die Mitspieler im Strafraum direkt angesprochen werden, um bestimmte Kommandos, Befehle, Hinweise zu erhalten. Die übrigen Spieler werden von diesen entsprechenden Hinweisen dann nicht gestört.

Es kann in allen möglichen Bereichen des Sportes aber auch der Sicherheitstechnik eingesetzt werden.

Die Technik ist gemäss der Erfindung reduziert auf das, was wirklich unabdingbar ist, damit aber sehr viel effizienter und schlagkräftiger.

Weitere Vorteile, Merkmale und Einzelheiten der Erfindung ergeben sich aus den nachfolgenden Beschreibung eines bevorzugten Ausführungsbeispieles sowie aus der Zeichnung; diese zeigt in

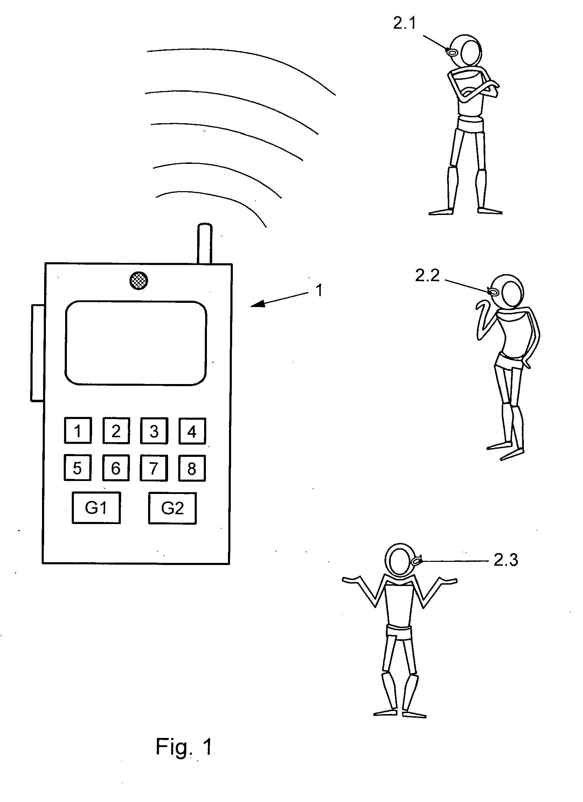

Figur 1 eine Basisstation 1, die eine beliebige Vielzahl von Ohr-Lautsprechern 2.1 bis 2.3 über wählbare, unterschiedliche oder gleiche Funkkanäle anspricht, um eine Information von der Basisstation 1 an einen oder mehrere Ohr-Lautsprecher 2.1 bis 2.3 weiterzuleiten. Diese akustischen Signale können ausgehen von der Basisstation 1 an einzelne Teilnehmer bzw. Ohr-Lautsprecher 2.1 oder 2.2 oder 2.3 entsprechend der Wahl der Frequenz übermittelt werden, oder auch gruppenweise durch beispielsweise Drücken einer Taste G1 oder G2 der Basisstation 1, wobei hieraus bestimmte Gruppen beispielsweise die Benutzer der Ohr-Lautsprecher 2.1, 2.2 gemeinsam über die gleiche Frequenz direkt angesprochen werden können, ohne dass die übrigen Benutzer, beispielsweise der Ohr-Lautsprecher 2.3 hiervon eine entsprechende Nachricht oder Mitteilung erhält.

Auf diese Weise lässt sich über Gruppenbildung der Tasten G1, G2 oder weiteren der nicht näher dargestellten Tasten eine Gruppe definieren, die mit der gleichen Frequenz Befehle, Weisungen, Mitteilungen erhält, anspricht. Dies soll ebenfalls im Rahmen der vorliegenden Erfindung liegen. Als besonders vorteilhaft hat sich erwiesen, die Basisstation 1 als handtragbares mobiles Gerät auszubilden.

**Bezugszeichenliste**

| | | | | | |
|---|---|---|---|---|---|
| 1 | Basisstation | 34 | | 67 | |
| 2 | Ohr-Lautsprecher | 35 | | 68 | |
| 3 | | 36 | | 69 | |
| 4 | | 37 | | 70 | |
| 5 | | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | G1 | Taste |
| 18 | | 51 | | G2 | Taste |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Im-Ohr-Lautsprechersystem mit einem Funkempfängerteil, angesteuert über eine Basisstation (1) mit entsprechendem Funk-Sendeteil,
**dadurch gekennzeichnet,**
**dass** von der Basisstation (1) aus eine Vielzahl von Im-Ohr-Lautsprechern (2.1 bis 2.3) über ebenso viele unterschiedliche Funkkanäle und -adressen ansteuerbar ist.

2. Im-Ohr-Lautsprechersystem nach Anspruch 1, **dadurch gekennzeichnet, dass** die Ansteuerung der einzelnen Im-Ohr-Lautsprecher auf den ihnen zugeteilten Funkkanälen/-adressen durch Nutzung mehrerer Mikrofone bzw. interner Schallquellen in der Basisstation und Parallelverarbeitung simultan möglich ist.

3. Im Ohr-Lautsprechersystem nach Anspruch 1 und 2, **dadurch gekennzeichnet, dass** jeweils pro Adressat nur ein Im-Ohr-Lautsprecher vorgesehen ist, so dass ein Ohr zum normalen Hören frei bleibt.

4. lm-Ohr-Lautsprechersystem nach einem der Ansprüche 1 bis 3, **dadurch gekennzeichnet, dass** die einzelnen Adressaten für eine Durchsage durch Druck auf eine entsprechend personalisierte Taste aufgerufen und angesprochen werden können.

5. Im-Ohr-Lautsprechersystem nach einem der Ansprüche 1 bis 4, **dadurch gekennzeichnet, dass** die Adressaten auch zu mehreren in einer Gruppe zusammengefasst oder alle simultan angesprochen werden können.

6. Im-Ohr-Lautsprechersystem nach wenigstens einem der Ansprüche 1 bis 5, **dadurch gekennzeichnet, dass** die Basisstation (1) als mobiles Handgerät ausgebildet ist.

7. Im-Ohr-Lautsprechersystem nach wenigstens einem der Ansprüche 1 bis 6, **dadurch gekennzeichnet, dass** die Basisstation einen oder eine Mehrzahl von Ohr-Lautsprechern (2.1 bis 2.3) drahtlos entspricht.

8. Im-Ohr-Lautsprechersystem nach Anspruch 7, **dadurch gekennzeichnet, dass** der Ohr-Lautsprecher (2.1 bis 2.3) drahtlos vollständig in ein menschliches Ohr mit integrierten Empfängerteil einsetzbar ist.

9. Im-Ohr-Lautsprechersystem nach wenigstens einem der Ansprüche 1 bis 8, **dadurch gekennzeichnet, dass** die Basisstation (1) über einzelne Tasten einzelne Adressaten direkt anspricht und über andere Tasten (G1, G2) vorwählbare Gruppen von Adressaten bzw. Vorwählbare Gruppen von Ohr-Lautsprecher (2.1 und/oder 2.2 und/oder 2.3) direkt anspricht.

10. Im-Ohr-Lautsprechersystem nach wenigstens einem der Ansprüche 1 bis 9, **dadurch gekennzeichnet, dass** an der Basisstation (1) anzeigbar ist, welche Ohr-Lautsprecher (2.1 bis 2.3) aktiv erreichbar und in Reichweite sind.
